# EUROPÄISCHE PATENTSCHRIFT

(11) **EP 2 652 359 B1**
(45) Veröffentlichungstag und Bekanntmachung des Hinweises auf die Patenterteilung: **11.04.2018**
(21) Anmeldenummer: 11810793.7
(22) Anmeldetag: 14.12.2011
(51) Int. Cl.: B60K 1/00, F16H 37/08, F16H 3/66, F16H 63/34, F16H 48/11

(54) **ÜBERSETZUNGS- UND AUSGLEICHSGETRIEBE SOWIE MOTOR- UND GETRIEBEEINHEIT**
TRANSMISSION GEAR AND DIFFERENTIAL GEAR, AND MOTOR UNIT AND GEAR UNIT
ENGRENAGE MULTIPLICATEUR ET DIFFÉRENTIEL, AINSI QUE GROUPE MOTEUR - TRANSMISSION

(30) Priorität: 15.12.2010 DE 102010054533
(43) Veröffentlichungstag der Anmeldung: 23.10.2013
(73) Patentinhaber: Volkswagen Aktiengesellschaft, 38440 Wolfsburg (DE)
(72) Erfinder: PETERSEN, Rainer, 38444 Wolfsborg (DE); LUTZ, Andreas, 38100 Braunschweig (DE); MÖCKEL, Jörg, 38524 Sassenborg (DE); HANKE, Stefan, 38126 Braunschweig (DE)
(86) Internationale Anmeldenummer: PCT/EP2011/006308
(87) Internationale Veröffentlichungsnummer: WO 2012/079751

(56) Entgegenhaltungen:
- US-A- 5 457 363

## Beschreibung

### Gebiet der Erfindung

Die Erfindung bezieht sich auf ein Übersetzungs- und Ausgleichsgetriebe mit einer Eingangswelle und zwei koaxial zu der Eingangswelle angeordneten Ausgangswellen, umfassend ein Gehäuse, in dem ein wenigstens eine Planetenstufe umfassender Übersetzungsabschnitt und ein als Stirnraddifferential ausgebildeter Ausgleichsabschnitt angeordnet sind.

Die Erfindung bezieht sich weiter auf eine Motor- und Getriebeeinheit, umfassend einen Elektromotor und ein koaxial an diesen angeflanschtes Übersetzungs- und Ausgleichsgetriebe der vorgenannten Art, wobei eine Motorausgangswelle des Elektromotors, die koaxial zu dessen Wicklungen angeordnet ist, mit der Eingangswelle des Getriebes verbunden und als Hohlwelle ausgebildet ist, die von einer der Ausgangswellen des Getriebes koaxial durchsetzt wird.

### Stand der Technik

Übliche Bauformen von Getrieben in Elektrofahrzeugen sind an die Bauformen herkömmlicher für die Kopplung mit Verbrennungskraftmaschinen ausgelegter Getriebe angelehnt. Dabei wird baulich eine scharfe Trennung zwischen den Funktionalitäten "Übersetzungsgetriebe" und "Ausgleichsgetriebe" (Differential) realisiert. Typischerweise liegt die Motorausgangswelle des Elektromotors parallel zur angetriebenen Achse. Die Motorausgangswelle ist dabei mit der Eingangswelle eines Übersetzungsgetriebes verbunden oder z.B. mittels einer Kupplung koppelbar. Die Ausgangswelle des Übersetzungsgetriebes weist einen parallelen Achsversatz zur Eingangswelle auf und treibt den Differentialkorb eines baulich getrennten Ausgleichsgetriebes an, dessen zwei Ausgangswellen als Achsflanschwellen das Drehmoment auf die mit ihnen verbundenen Abtriebsräder der angetriebenen Achse verteilen. Diese Anordnung ist im Hinblick auf den benötigten Bauraum äußerst ungünstig.

Im Hinblick auf den benötigten Bauraum günstiger sind sogenannte Inlinegetriebe, die koaxial an den Elektromotor anflanschbar sind. In für Elektromotoren typischer Weise liegt die Motorausgangswelle koaxial zu den Motorwicklungen. Das Getriebe wird so an den Motor angeflanscht, dass die Motorausgangswelle koaxial mit der Getriebeeingangswelle verbunden wird. Das Getriebe kann dabei einen Übersetzungsabschnitt, d.h. einen Getriebeanteil, der die Funktionalität "Übersetzung" realisiert und einen nachgeschalteten Ausgleichsabschnitt, d.h. einen Getriebeteil der die Funktionalität "Differential" realisiert, in einem Gehäuse integrieren. Beide Differentialausgangswellen können dabei koaxial zueinander und zu der Eingangswelle sowie der Motorausgangswelle ausgerichtet sein. Dabei durchsetzt eine der Differentialausgangswellen die Getriebeeingangswelle sowie die Motorausgangswelle, die beide als Hohlwellen ausgebildet sind. Ein Beispiel für diese Bauart ist die Getriebestruktur des Brennstoffzellenfahrzeugs des Typs HyMotion III der Volkswagen AG. Der Übersetzungsabschnitt des Getriebes ist dabei als Planetenstufe mit gestuften Planeten ausgebildet, wobei eingangsseitig eine größere Planetenstufe von der mit der Eingangswelle verbundenen Sonne angetrieben wird und eine ausgangsseitige, kleinere Planetenstufe mit einem gehäusefesten Hohlrad kämmt. Der als Abtrieb der Übersetzungsstufe wirkende Steg ist direkt mit dem Steg eines Stirnraddifferentials in der Bauform mit zwei Sonnen als Radantriebe angeschlossen. Diese Getriebestruktur weist verschiedene Nachteile auf. Erstens kann es aufgrund der erforderlichen, sehr großen Verzahnungstoleranzen zu unerwünschter Geräuschbildung kommen, zweitens ist die Positionierung der Stufenplaneten bei der Montage problematisch und drittens ist aus Bauraumgründen keine einfache Integration einer Parksperre möglich.
Weiterhin ist aus der US 5,457,363 A ein Getriebe bekannt, dessen Übersetzungsabschnitt zwei Planetenstufen aufweist, nämlich eine Eingangsstufe, deren Sonnenrad mit der Eingangswelle verbunden ist, und eine Laststufe mit gehäusefestem Hohlrad, deren Sonnenrad mit dem Steg der Eingangsstufe verbunden ist und deren Steg mit dem Hohlrad der Eingangsstufe verbunden ist. Das Stirnraddifferential ist als ein Planetengetriebe mit positiver Standübersetzung ausgebildet, dessen Hohlrad mit dem Steg der Laststufe verbunden ist und dessen Steg und dessen Sonnenrad jeweils mit einer der Ausgangswellen verbunden ist. Die mit dem Steg der Laststufe verbundenen Hohlräder der Eingangsstufe und des Differentials sind mittels eines radialen Gleitlagers in der Sonne der Laststufe drehbar gelagert. Solche Lagerung ist weist große Reibverluste auf und ist lediglich für sehr kleine Drehmomente ausgelegt.

### Aufgabenstellung

Es ist die Aufgabe der vorliegenden Erfindung ein gattungsgemäßes Übersetzungs- und Ausgleichsgetriebe derart weiterzubilden, dass die genannten Nachteile überwunden werden, ohne dass damit zusätzliche Bauraumnachteile verbunden wären.

Es ist eine weitere Aufgabe der vorliegenden Erfindung, eine entsprechend verbesserte Motor- und Getriebeeinheit zur Verfügung zu stellen.

### Darlegung der Erfindung

Die oben erstgenannte Aufgabe wird in Verbindung mit den Merkmalen des Oberbegriffs von Anspruch 1 dadurch gelöst, dass eine durchgehende, das Hohlrad der Eingangsstufe, den Steg der Laststufe und das Hohlrad des Stirnraddifferentials tragende Koppelwelle beidseitig der Gesamtheit von Übersetzungsabschnitt und Ausgleichsabschnitt am Gehäuse gelagert ist. Die Lagerung kann somit nach außerhalb des mit rotierenden Elementen dicht gepackten Bereichs des Getriebes verlagert werden, was zu einer besonders kompakten Bauform führt.

Die oben zweitgenannte Aufgabe wird mit den Merkmalen von Anspruch 9 durch den Einsatz eines erfindungsgemäßen Übersetzungs- und Ausgleichsgetriebes als Getriebeeinheit einer gattungsgemäßen Motor- und Getriebeeinheit gelöst.

Die Erfindung umfasst zwei wesentliche Merkmalskomplexe.Zum einen wird der bekannte, mit gestuften Planeten realisierte Übersetzungsabschnitt durch zwei einfache Planetenstufen ersetzt, die gemäß ihrer Funktion hier als Eingangsstufe und als Laststufe bezeichnet werden sollen. Dabei ist das Sonnenrad der Eingangsstufe mit der Eingangswelle verbunden oder, wie weiter unten für eine Weiterbildung der Erfindung näher erläutert, beispielsweise mittels einer Kupplung koppelbar. Die Verwendung der Sonne der Eingangsstufe als Eingangselement des erfindungsgemäßen Getriebes ist im Hinblick auf seine koaxiale Anflanschung an den Elektromotor besonders günstig. Die Eingangsstufe ist als vollwertige Planetenstufe mit Sonnenrad, Steg und Hohlrad ausgebildet, wobei auf dem Steg ein Satz einfacher Planetenräder gelagert ist. Eine solche Planetenstufe hat eine negative Standübersetzung, wobei sich insbesondere eine Standübersetzung von -2 ± 10% als günstig erwiesen hat. Unmittelbar neben der Eingangsstufe ist die Laststufe als weitere, vollwertige Planetenstufe mit einfachem Planetensatz ausgebildet, wobei der Steg der Eingangsstufe mit dem Sonnenrad der Laststufe verbunden ist und das Hohlrad der Eingangsstufe mit dem Steg der Laststufe verbunden ist. Das Hohlrad der Laststufe ist gehäusefest. Als günstig hat sich für die Laststufe eine Standübersetzung von -3 ± 10% erwiesen. Mit solchen Standübersetzungen lassen sich Gesamtübersetzungen im Bereich von ca. 8-12 erreichen, was für typische, elektrische Achsantriebe günstig ist. Die Hauptlast wird dabei von der größeren Laststufe aufgenommen. Während die kleinere Eingangsstufe deutlich geringer belastet ist. Als Abtrieb des beschriebenen Übersetzungsabschnitts dient der Steg der Laststufe.

Der zweite Merkmalskomplex der Erfindung betrifft die Ausgestaltung des Ausgleichsabschnitts, d.h. des Differentials. Da der Übersetzungsabschnitt des erfindungsgemäßen Getriebes einen axial größeren Bauraum einnimmt als der Übersetzungsabschnitt des Standes der Technik, kommt eine Übernahme der bekannten Stirnraddifferential-Bauform mit zwei Sonnen nicht in Frage. Die Erfindung sieht daher vor, als Ausgleichsabschnitt ein als vollständiges Planetengetriebe mit positiver Standübersetzung ausgebildetes Stirnraddifferential zu verwenden. Das Eingangsdrehmoment, welches vom Steg der Laststufe geliefert wird, wird über das Hohlrad des Stirnraddifferentials eingeleitet. Dessen Steg trägt zwei Sätze miteinander kämmender Planeten, sodass eine positive Standübersetzung, insbesondere eine Standübersetzung von +2 realisiert ist. Steg und Sonnenrad des Differentials dienen als Ausgangselemente und sind mit jeweils einer der Getriebeausgangswellen verbunden. Eine der Getriebeausgangswellen durchsetzt dabei günstigerweise die als Hohlwelle ausgebildete Eingangswelle. Bevorzugt handelt es sich dabei um die mit der Sonne des Stirnraddifferentials verbundene Ausgangswelle.

Bei einer Weiterbildung der Erfindung ist vorgesehen, dass der Steg der Eingangsstufe mit einer Verlängerungswelle verbunden ist, die über das eingangsstufenseitige Lager der Koppelwelle übersteht. Diese Verlängerungswelle bietet einen leicht zugänglichen und vielfach nutzbaren Angriffspunkt zur Einwirkung auf die erfindungsgemäße Getriebestruktur. Zwei der Nutzungsmöglichkeiten sollen nachfolgend beschrieben werden.

Als besonders günstiger Ansatzpunkt für die Wechselwirkung mit einer Parksperre hat sich der Steg der Eingangsstufe erwiesen. So ist bei einer Weiterbildung der Erfindung vorgesehen, dass der Steg der Eingangsstufe mit einem Parksperren-Stirnrad verbunden ist, welches mit einer in dem Gehäuse enthaltenen Parksperrenvorrichtung in Eingriff steht. Blockiert die Parksperrenvorrichtung nämlich das Parksperren-Stirnrad wird zugleich mit dem Steg der Eingangsstufe das Sonnenrad der Laststufe festgehalten. Damit ist die gesamte Laststufe, die ja ein gehäusefestes Hohlrad aufweist, blockiert. Die Last der Parksperre wirkt dabei auf die robuste Laststufe, sodass die kleinere Eingangsstufe nicht überbeansprucht wird.

Diese Weiterbildung der Erfindung wird besonders vorteilhaft zusammen mit der vorgenannten Variante mit Verlängerungswelle realisiert. Dabei ist das Parksperren-Stirnrad bevorzugt in dem über das Lager der Koppelwelle überstehenden Abschnitt der Verlängerungswelle angeordnet. Mit anderen Worten wird der durch die Verlängerungswelle aus dem eigentlichen Arbeitsbereich des Getriebes herausgeführte Angriffspunkt für die Wechselwirkung mit der Parksperrenvorrichtung genutzt. Entsprechend kann die Parksperrenvorrichtung in einem anderweitig nicht genutzten Gehäusebereich untergebracht werden.

Bei einer anderen Weiterbildung der Erfindung ist eine Kupplungsvorrichtung vorgesehen, die in einer ersten Kupplungsstellung das Sonnenrad der Eingangsstufe mit der Eingangswelle koppelt, in einer zweiten Kupplungsstellung den Steg der Eingangsstufe mit der Eingangswelle koppelt und in einer dritten Kupplungsstellung die Eingangsstufe vollständig abkoppelt. Die bedeutet, dass das erfindungsgemäße Getriebe durch die zusätzliche Kupplungsvorrichtung zu einem schaltbaren Zweiganggetriebe erweitert wird. Als Eingangselement des erfindungsgemäßen Getriebes dienen alternativ das Sonnenrad der Eingangsstufe oder der Steg der Eingangsstufe. Beide sind alternativ zueinander mittels
der Kupplungsvorrichtung mit der Eingangswelle koppelbar. Dabei wirkt das Getriebe in der obengenannten ersten Kupplungsstellung wie zuvor beschrieben. In der vorgenannten zweiten Kupplungsstellung wirkt allein die Laststufe als Übersetzungsabschnitt mit entsprechend kürzerer Übersetzung. In der oben genannten dritten Kupplungsstellung ist ein angeschlossener Elektromotor vollständig vom Getriebe getrennt.

Auch diese Weiterbildung der Erfindung wird bevorzugt gemeinsam mit der oben erläuterten Variante mit Verlängerungswelle realisiert. Auch hier bietet die Verlängerungswelle einen leicht zugänglichen Angriffspunkt - in diesem Fall für die Kupplungsvorrichtung, die bevorzugt an dem über das Lager der Koppelwelle überstehenden Abschnitt der Verlängerungswelle angreift.

Soll zusätzlich auch die oben bereits erwähnte Parksperrenintegration realisiert werden, ist es günstig, wenn die Kupplungsanordnung an einem dem Lager der Koppelwelle abgewandten Teil des überstehenden Abschnitts der Verlängerungswelle ansetzt. Mit anderen Worten staffeln sich die einzelnen Elemente bevorzugt in der folgenden Reihenfolge: Elektromotor, Kupplungsvorrichtung, Parksperre, erstes Koppelwellenlager, Eingangsstufe, Laststufe, Stirnraddifferential, zweites Koppelwellenlager.

Weitere Merkmale und Vorteile der Erfindung ergeben sich aus der nachfolgenden, speziellen Beschreibung und den Zeichnungen.

### Kurze Beschreibung der Zeichnungen

Es zeigen:
- Figur 1:: eine schematische Darstellung einer Antriebseinheit eines Kraftfahrzeugs mit einer erfindungsgemäßen Motor- und Getriebeeinheit in einer ersten Ausführungsform,
- Figur 2:: eine Weiterbildung der Antriebseinheit von Figur 1.

### Ausführliche Beschreibung bevorzugter Ausführungsformen

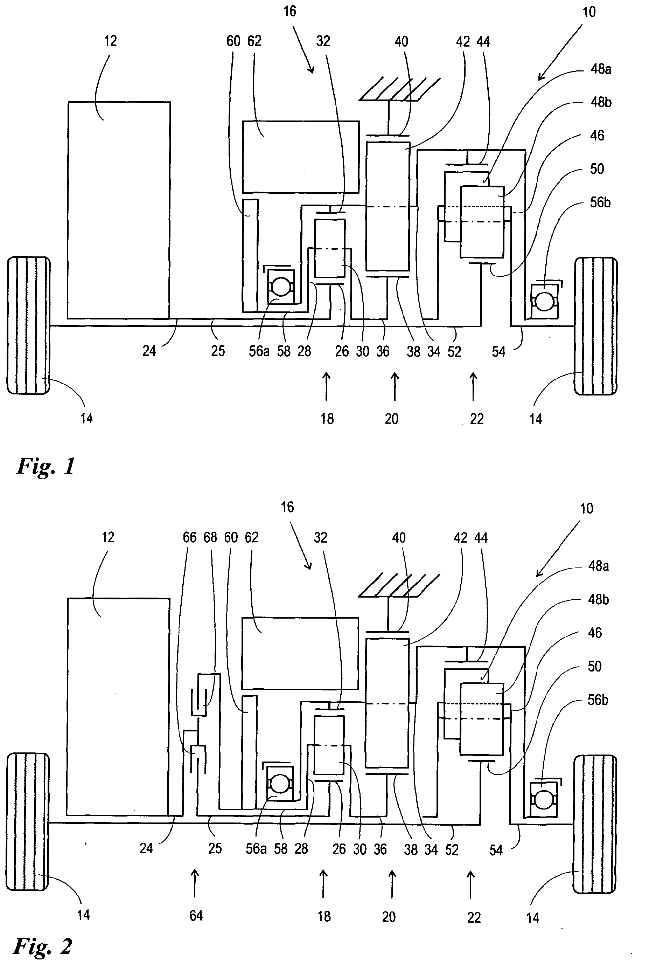

Die Figuren 1 uns 2 zeigen unterschiedliche Ausführungsformen einer Antriebseinheit 10 eines nicht weiter im Detail dargestellten Kraftfahrzeugs, wobei gleiche Bezugszeichen in den Figuren auf gleiche Elemente hindeuten. Die dargestellte Antriebseinheit dient der Übertragung eines von einem Elektromotor 12 erzeugten Drehmomentes auf Abtriebsräder 14 einer angetriebenen Achse. In der schematischen Darstellung der Figuren 1 und 2 sind der Elektromotor 12 und das an diesen angeschlossene Getriebe 16 in üblicher Halbdarstellung gezeigt. Insbesondere ist in den Figuren nur die "obere" Hälfte der der an sich rotationssymmetrischen Vorrichtung dargestellt. Nachfolgend soll zunächst Figur 1 in Ausführlichkeit und anschließend im Zusammenhang mit Figur 2 nur die Unterschiede zur Ausführungsform von Figur 1 erläutert werden.

Das der Übertragung des Drehmomentes vom Elektromotor 12 auf die Abtriebsräder 14 dienende Getriebe 16 setzt sich im Wesentlichen aus drei funktionalen Gruppen zusammen. Es sind dies eine Eingangsstufe 18, eine Laststufe 20 und eine Ausgleichsstufe 22, die hier auch als Differential bezeichnet werden soll. Die einzelnen Stufen 18, 20, 22 sind in der aufgezählten Reihenfolge benachbart und kompakt nebeneinander angeordnet.

Eine Ausgangswelle 24 des Elektromotors 12, die konzentrisch zu dessen nicht näher dargestellten Wicklungen angeordnet ist, ist als Hohlwelle ausgebildet. An sie schließt sich die ebenfalls als Hohlwelle ausgebildete Eingangswelle 25 des Getriebes 16 an. Sie ist mit dem Sonnenrad 26 der als vollständige Planetenstufe mit einfachem Planetensatz ausgebildeten Eingangsstufe 18 verbunden. Die Eingangsstufe 18 umfasst weiter einen Steg 28, auf dem ein einfacher Satz Planetenräder 30 rotierbar gelagert ist. Weiter umfasst die Eingangsstufe 18 ein Hohlrad 32. Die Planeten 30 kämmen einerseits mit dem Sonnenrad 26 und andererseits mit dem Hohlrad 32.

Die Eingangsstufe 18 ist über zwei Wellen mit der Laststufe 20 verbunden, nämlich mittels der Welle des Hohlrades 32 mit dem Steg 34 der Laststufe 20 und mittels der als Hohlwelle ausgebildeten ersten Koppelwelle 36, welche mit dem Steg 28 der Eingangsstufe verbunden ist, mit dem Sonnenrad 38 der Laststufe. Das Hohlrad 40 der als vollständige Planetenstufe mit einfachem Planetensatz ausgebildeten Laststufe 20 ist an einem nicht näher dargestellten Getriebegehäuse festgelegt. Ein einfacher Satz Planetenräder 42 kämmt einerseits mit dem Sonnenrad 38 und andererseits mit dem Hohlrad 40.

Die Eingangsstufe 18 und die Laststufe 20 bilden gemeinsam den Übersetzungsabschnitt des Getriebes 16, der bei geeigneter Auslegung eine Gesamtübersetzung zwischen i_{gesamt}= 8 bis i_{gesamt} = 12 ermöglicht. Spezielle Auslegungsbeispiele sollen weiter unten angegeben werden.

Als Ausgangselement des Übersetzungsabschnitts dient der Steg 34 der Laststufe 20. Über diesen ist der Übersetzungsabschnitt mit der Ausgleichsstufe 22 verbunden, die als Stirnraddifferential mit positiver Standübersetzung von i₀=+2 ausgebildet ist. Bei einem derartigen Stirnraddifferential wirkt dessen Hohlrad 44 als Eingangselement. Ein Steg 46 trägt einen doppelten Satz von Planetenrädern 48a, 48b, die miteinander kämmen. Zusätzlich kämmt der erste Teilsatz von Planetenrädern 48a mit dem Hohlrad 44 und der zweite Teilsatz von Planetenrädern 48b mit dem Sonnenrad 50 des Differentials 22. Als Ausgangselemente des Differentials 22 dienen einerseits der Steg 46 und andererseits das Sonnenrad 50.

Bei der gezeigten Ausführungsform ist das Sonnenrad 50 mit einer ersten Getriebeausgangswelle 52 verbunden, die zentral verläuft und die Hohlwellen von erster Koppelwelle 36, Getriebeeingangswelle 25 und Motorausgangswelle 24 konzentrisch durchsetzt. Der Steg 46 des Differentials 22 ist mit einer zweiten Getriebeausgangswelle 54 verbunden, die koaxial, jedoch entgegengesetzt zur ersten Getriebeausgangswelle 52 verläuft.

Ein besonderer Vorteil der dargestellten Konstruktion liegt darin, dass eine als zweite Koppelwelle bezeichnete Welle, die das Hohlrad 32 der Eingangsstufe, den Steg 34 der Laststufe und das Hohlrad 44 des Differentials trägt, das gesamte Getriebe durchsetzt. Folglich muss eine Lagerung dieser zweiten Koppelwelle nicht innerhalb der funktionalen Getriebestruktur erfolgen, sondern kann nach außerhalb verlegt werden. Entsprechende Lager 56 a, b sind daher beidseitig außerhalb der Gesamtheit von Übersetzungsabschnitt und Differential angeordnet.

In der in Figur 1 dargestellten Ausführungsform ist ein zusätzliches Funktionselement realisiert, nämlich eine Parksperre. Die Schwierigkeit der Integration einer Parksperre liegt insbesondere in ihrem Bauraumbedarf. Bei der in Figur 1 dargestellten Ausführungsform wird daher ein Angriffspunkt für die Parksperre mittels einer Verlängerungswelle 58, die mit dem Steg 28 der Eingangsstufe 18 verbunden ist, nach außerhalb der funktionalen und kompakt gebauten Getriebeeinheit geführt, insbesondere erstreckt sich die Verlängerungswelle 58 über das eingangsseitige Koppelwellenlager 56a hinaus. Die Verlängerungswelle 58 trägt ein großes Stirnrad 60, in welches eine Betätigungsplatte einer nicht näher dargestellten Parksperrenvorrichtung 62 eingreifen kann. Ist das Parksperrenstirnrad 60 mittels der Parksperrenvorrichtung 62 blockiert, ist über den Steg 28 der Eingangsstufe 18 auch das Sonnenrad 38 der Laststufe 20 blockiert. Somit sind zwei von drei Elementen der Laststufe 20, nämlich dessen Sonnenrad 38 und dessen gehäusefestes Hohlrad 40 blockiert, sodass die gesamte Laststufe 20 und damit das gesamte Getriebe 16 blockiert ist. Die Last liegt dabei ausschließlich in der entsprechend robust ausgebildeten Laststufe.

Als beispielhafte Auslegung für eine Vorrichtung gemäß Figur 1 haben sich folgende Werte bewährt: Standübersetzung der Eingangsstufe 18 i₀₁ = -2,09, Standübersetzung der Laststufe 20 i₀₂ = -2,72, Standübersetzung des Stirnraddifferentials i₀₃ = +2,0. Mit dieser Auslegung ergibt sich eine Gesamtübersetzung der Vorrichtung von i_{gesamt} = 9,4.

Figur 2 zeigt eine Weiterbildung des Antriebs von Figur 1 zu einem schaltbaren Zweiganggetriebe. Hierzu wird das System von Figur 1 um eine Kupplungsvorrichtung 64 erweitert, die eingangsseitig des Getriebes 16 positioniert ist. Bei dieser Ausführungsform ist die Eingangswelle 25 des Getriebes 16 nicht fest mit der Ausgangswelle 24 des Elektromotors 12 verbunden, sondern über eine erste Kupplung 66 der Kupplungsvorrichtung 64 gekoppelt. Mittels einer zweiten Kupplung 68 der als Doppelkupplung ausgelegten Kupplungsvorrichtung 64 ist die Verlängerungswelle 58, die sich über das Parksperrenstirnrad 60 hinaus erstreckt, ebenfalls, insbesondere alternativ zu der Eingangswelle 25 mit der Motorausgangswelle 24 koppelbar.

Der Fachmann erkennt drei sinnvolle Schaltzustände der Doppelkupplung 64, deren Übergänge durch geeignetes Kupplungsmanagement steuerbar sind. In einem ersten Schaltzustand ist die erste Kupplung 66 geschlossen und die zweite Kupplung 68 geöffnet. In diesem Zustand unterscheidet sich die Funktionalität des Getriebes 16 von Figur 2 nicht von derjenigen des Getriebes 16 von Figur 1. Auf eine Wiederholung der Erläuterung soll daher verzichtet werden. In einer zweiten Kupplungsstellung ist die zweite Kupplung 68 geschlossen und die erste Kupplung 66 geöffnet. Das Drehmoment der Motorausgangswelle 24 wird somit über die Verlängerungswelle 58 auf den Steg 28 der Eingangsstufe 18 übertragen, der jedoch frei umläuft, da die mit dem Sonnenrad 26 verbundene Eingangswelle 25 freiläuft. Mit anderen Worten wird die Eingangsstufe 18 "übersprungen". Die Laststufe 20, über deren Sonnenrad 38 das Drehmoment eingeleitet wird, dient mit ihrem gehäusefesten Hohlrad 40 als einfache Übersetzungsstufe, sodass ihre Standübersetzung die Gesamtübersetzung des Antriebs bestimmt. In einer dritten Kupplungsstellung sind beide Kupplungen 66, 68 der Doppelkupplung 64 geöffnet. Der Elektromotor 12 ist damit vollständig vom Getriebe abgekoppelt.

Als beispielhafte Auslegung haben sich folgende Werte bewährt: Standübersetzung der Eingangsstufe 18 i₀₁ = -2,09, Standübersetzung der Laststufe 20 i₀₂ = -2,97, Standübersetzung des Stirnraddifferentials 22 i₀₃ = +2,0. In der als "erster Gang" bezeichneten ersten Kupplungsstellung mit geschlossener erster Kupplung 66 und offener zweiter Kupplung 68 wird somit eine Gesamtübersetzung von i_{gesamt} = 10,18 bei einer moderaten Relativdrehzahl in der offenen zweiten Kupplung 68 von ca. 60% der Eingangsdrehzahl realisiert. In der als "zweiter Gang" bezeichneten zweiten Kupplungsstellung mit geschlossener zweiter Kupplung 68 und offener erster Kupplung 66 wird eine Gesamtübersetzung von i_{gesamt} = 3,97 bei einer ebenfalls noch moderaten Relativdrehzahl an der offenen ersten Kupplung 66 von ca. 150% der Eingangsdrehzahl realisiert.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben. Insbesondere kann die spezielle Auslegung der Standübersetzungen der einzelnen Getriebestufen an die insbesondere von der Leistungsfähigkeit des Elektromotors 12 beeinflussten Umstände des Einzelfalls angepasst werden.

### Bezugszeichenliste

- 10: Antrieb
- 12: Elektromotor
- 14: Abtriebsräder
- 16: Getriebe
- 18: Eingangsstufe
- 20: Laststufe
- 22: Differential
- 24: Motorausgangswelle
- 25: Getriebeeingangswelle
- 26: Sonnenrad von 18
- 28: Steg von 18
- 30: Planetenrad von 18
- 32: Hohlrad von 18
- 34: Steg von 20
- 36: erste Koppelwelle
- 38: Sonnenrad von 20
- 40: Hohlrad von 20
- 42: Planetenrad von 20
- 44: Hohlrad von 22
- 46: Steg von 22
- 48a, b: Planetenräder von 22
- 50: Sonnenrad von 22
- 52: erste Getriebeausgangswelle
- 54: zweite Getriebeausgangswelle
- 56a,b: Koppelwellenlager
- 58: Verlängerungswelle
- 60: Parksperrenstirnrad
- 62: Doppelkupplung
- 66: erste Kupplung von 64
- 68: zweite Kupplung von 64

## Patentansprüche

1. Übersetzungs- und Ausgleichsgetriebe mit einer Eingangswelle (25) und zwei koaxial zu der Eingangswelle (25) angeordneten Ausgangswellen (52, 54), umfassend ein Gehäuse, in dem ein wenigstens eine Planetenstufe (18, 22) umfassender Übersetzungsabschnitt und ein als Stirnraddifferential (22) ausgebildeter Ausgleichsabschnitt angeordnet sind,
wobei der Übersetzungsabschnitt zwei Planetenstufen (18, 20) aufweist, nämlich eine Eingangsstufe (18), deren Sonnenrad (22) mit der Eingangswelle (25) verbunden oder koppelbar ist, und eine Laststufe (20) mit gehäusefestem Hohlrad (40), deren Sonnenrad (38) mit dem Steg (28) der Eingangsstufe (18) verbunden ist und deren Steg (34) mit dem Hohlrad (32) der Eingangsstufe (18) verbunden ist, und
dass das Stirnraddifferential (22) als ein Planetengetriebe mit positiver Standübersetzung ausgebildet ist, dessen Hohlrad (44) mit dem Steg der Laststufe (20) verbunden ist und dessen Steg (46) und dessen Sonnenrad (50) jeweils mit einer der Ausgangswellen (52, 54) verbunden sind **dadurch gekennzeichnet,**
**dass** eine durchgehende, das Hohlrad (32) der Eingangsstufe (18), den Steg (34) der Laststufe (20) und das Hohlrad (44) des Stirnraddifferentials (22) tragende Koppelwelle beidseitig der Gesamtheit von Übersetzungsabschnitt und Ausgleichsabschnitt am Gehäuse gelagert ist.

2. Getriebe nach Anspruch 1,
**dadurch gekennzeichnet,**
**dass** eine der Ausgangswellen (52) die als Hohlwelle ausgebildete Eingangswelle (25) koaxial durchsetzt.

3. Getriebe nach einem vorangehenden Ansprüche,
**dadurch gekennzeichnet,**
**dass** der Steg (32) der Eingangsstufe (18) mit einer Verlängerungswelle (58) verbunden ist, die über das eingangsstufenseitige Lager (56a) der Koppelwelle übersteht.

4. Getriebe nach einem vorangehenden Ansprüche,
**dadurch gekennzeichnet,**
**dass** der Steg (32) der Eingangsstufe (18) mit einem Parksperren-Stirnrad (60) verbunden ist, welches mit einer in dem Gehäuse enthaltenen Parksperrenvorrichtung (62) in Eingriff steht.

5. Getriebe nach Anspruch 4, soweit rückbezogen auf Anspruch 3,
**dadurch gekennzeichnet,**
**dass** das Parksperren-Stirnrad (60) in dem über das Lager (56a) der Koppelwelle überstehenden Abschnitt der Verlängerungswelle angeordnet ist.

6. Getriebe nach einem der vorangehenden Ansprüche,
**dadurch gekennzeichnet,**
**dass** eine Kupplungsvorrichtung (64) vorgesehen ist, die in einer ersten Kupplungsstellung das Sonnenrad (26) der Eingangsstufe (18) mit der Eingangswelle (25) koppelt, in einer zweiten Kupplungsstellung den Steg (28) der Eingangsstufe (18) mit der Eingangswelle (25) koppelt und in einer dritten Kupplungsstellung die Eingangsstufe (18) vollständig abkoppelt.

7. Getriebe nach Anspruch 6, soweit rückbezogen auf Anspruch 3,
**dadurch gekennzeichnet,**
**dass** die Kupplungsanordnung (64) an dem über das Lager (56a) der Koppelwelle überstehenden Abschnitt der Verlängerungswelle (58) angreift.

8. Getriebe nach Anspruch 7, soweit rückbezogen auf 3,
**dadurch gekennzeichnet,**
**dass** die Kupplungsanordnung (64) an einem dem Lager (56a) der Koppelwelle abgewandten Teil des überstehenden Abschnitts der Verlängerungswelle (58) ansetzt.

9. Motor- und Getriebeeinheit, umfassend einen Elektromotor (22) und ein koaxial an diesen angeflanschtes Übersetzungs- und Ausgleichsgetriebe (16) nach einem der vorangehenden Ansprüche, wobei eine Motorausgangswelle (24) des Elektromotors (12), die koaxial zu dessen Wicklungen angeordnet ist, mit der Eingangswelle (25) des Getriebes (16) verbunden und als Hohlwelle ausgebildet ist, die von einer der Ausgangswellen (52) des Getriebes koaxial durchsetzt wird.

## Claims

1. Transmission and differential gear mechanism having an input shaft (25) and two output shafts (52, 54) which are arranged coaxially with respect to the input shaft (25), comprising a housing, in which a transmission section which comprises at least one planetary stage (18, 22) and a differential section which is configured as a spur gear differential (22) are arranged,
the transmission section having two planetary stages (18, 20), namely an input stage (18), the sun gear (22) of which is connected or can be coupled to the input shaft (25), and a load stage (20) with an internal gear (40) which is fixed to the housing, the sun gear (38) of which load stage (20) is connected to the spider (28) of the input stage (18), and the spider (34) of which sun gear (38) is connected to the internal gear (32) of the input stage (18), and
the spur gear differential (22) is configured as a planetary gear mechanism with a positive static transmission ratio, the internal gear (44) of which planetary gear mechanism is connected to the spider of the load stage (20), and the spider (46) and the sun gear (50) of which planetary gear mechanism are connected in each case to one of the output shafts (52, 54), **characterized**
**in that** a continuous coupler shaft which supports the internal gear (32) of the input stage (18), the spider (34) of the load stage (20) and the internal gear (44) of the spur gear differential (22) is mounted on the housing on both sides of the aggregate of the transmission section and the differential section.

2. Gear mechanism according to Claim 1, **characterized in that** one of the output shafts (52) coaxially penetrates the input shaft (25) which is configured as a hollow shaft.

3. Gear mechanism according to either of the preceding claims, **characterized in that** the spider (32) of the input stage (18) is connected to an extension shaft (58) which projects beyond the input stage-side bearing (56a) of the coupler shaft.

4. Gear mechanism according to one of the preceding claims, **characterized in that** the spider (32) of the input stage (18) is connected to a parking lock spur gear (60) which is in engagement with a parking lock apparatus (62) which is contained in the housing.

5. Gear mechanism according to Claim 4, in so far as it refers back to Claim 3, **characterized in that** the parking lock spur gear (60) is arranged **in that** section of the extension shaft which projects beyond the bearing (56a) of the coupler shaft.

6. Gear mechanism according to one of the preceding claims, **characterized in that** a clutch apparatus (64) is provided which couples the sun gear (26) of the input stage (18) to the input shaft (25) in a first clutch position, couples the spider (28) of the input stage (18) to the input shaft (25) in a second clutch position, and completely decouples the input stage (18) in a third clutch position.

7. Gear mechanism according to Claim 6, in so far as it refers back to Claim 3, **characterized in that** the clutch arrangement (64) acts on that section of the extension shaft (58) which projects beyond the bearing (56a) of the coupler shaft.

8. Gear mechanism according to Claim 7, in so far as it refers back to Claim 3, **characterized in that** the clutch arrangement (64) acts on a part of the projecting section of the extension shaft (58) which faces away from the bearing (56a) of the coupler shaft.

9. Motor and gear mechanism unit, comprising an electric motor (22) and a transmission and differential gear mechanism (16) according to one of the preceding claims which is flange-connected coaxially to the said electric motor (22), a motor output shaft (24) of the electric motor (12), which motor output shaft (24) is arranged coaxially with respect to the windings of the said electric motor (12), being connected to the input shaft (25) of the gear mechanism (16) and being configured as a hollow shaft which is penetrated coaxially by one of the output shafts (52) of the gear mechanism.

## Revendications

1. Transmission à réducteur et différentiel comprenant un arbre d'entrée (25) et deux arbres de sortie (52, 54) disposés coaxialement par rapport à l'arbre d'entrée (25), comprenant un boîtier dans lequel sont disposées une portion de réducteur comprenant au moins un étage planétaire (18, 22) et une portion de différentiel réalisée sous forme de différentiel à pignon droit (22),
la portion de réducteur présentant deux étages planétaires (18, 20), à savoir un étage d'entrée (18), dont la roue solaire (22) est connectée ou peut être accouplée à l'arbre d'entrée (25), et un étage de charge (20) avec une couronne dentée (40) fixée au boîtier, dont la roue solaire (38) est connectée au porte-satellites (28) de l'étage d'entrée (18) et dont le porte-satellites (34) est connecté à la couronne dentée (32) de l'étage d'entrée (18), et
le différentiel à pignon droit (22) étant réalisé sous forme d'engrenage planétaire avec un rapport de démultiplication de base positif, dont la couronne dentée (44) est connectée au porte-satellites de l'étage de charge (20) et dont le porte-satellites (46) et la roue solaire (50) sont à chaque fois connectés à l'un des arbres de sortie (52, 54), **caractérisée en ce qu'**un arbre d'accouplement continu, portant la couronne dentée (32) de l'étage d'entrée (18), le porte-satellites (34) de l'étage de charge (20) et la couronne dentée (44) du différentiel à pignon droit (22) est supporté sur le boîtier de part et d'autre de l'ensemble constitué par la portion de réducteur et la portion de différentiel.

2. Transmission selon la revendication 1,
**caractérisée en ce que**
l'un des arbres de sortie (52) traverse coaxialement l'arbre d'entrée (25) réalisé sous forme d'arbre creux.

3. Transmission selon l'une quelconque des revendications précédentes,
**caractérisée en ce que**
le porte-satellites (32) de l'étage d'entrée (18) est connecté à un arbre de prolongement (58) qui dépasse au-delà du palier côté étage d'entrée (56a) de l'arbre d'accouplement.

4. Transmission selon l'une quelconque des revendications précédentes,
**caractérisée en ce que**
le porte-satellites (32) de l'étage d'entrée (18) est connecté à un pignon droit du verrouillage de stationnement (60), qui est en prise avec un dispositif de verrouillage de stationnement (62) inclus dans le boîtier.

5. Transmission selon la revendication 4 dans la mesure où elle se rapporte à la revendication 3,
**caractérisée en ce que**
le pignon droit de verrouillage de stationnement (60) est disposé dans la portion de l'arbre de prolongement dépassant au-delà du palier (56a) de l'arbre d'accouplement.

6. Transmission selon l'une quelconque des revendications précédentes,
**caractérisée en ce**
**qu'**il est prévu un dispositif d'embrayage (64) qui, dans une première position d'embrayage, accouple la roue solaire (26) de l'étage d'entrée (18) à l'arbre d'entrée (25), dans une deuxième position d'embrayage, accouple le porte-satellites (28) de l'étage d'entrée (18) à l'arbre d'entrée (25) et dans une troisième position d'embrayage, désaccouple complètement l'étage d'entrée (18).

7. Transmission selon la revendication 6 dans la mesure où elle se rapporte à la revendication 3,
**caractérisée en ce que**
l'agencement d'embrayage (64) s'applique contre la portion de l'arbre de prolongement (58) dépassant au-delà du palier (56a) de l'arbre d'accouplement.

8. Transmission selon la revendication 7 dans la mesure où elle se rapporte à la revendication 3,
**caractérisée en ce que**
l'agencement d'embrayage (64) s'applique contre une partie de la portion en saillie de l'arbre de prolongement (58) opposée au palier (56a) de l'arbre d'accouplement.

9. Unité de moteur et transmission, comprenant un moteur électrique (22) et une transmission à réducteur et différentiel (16) fixée par bridage coaxialement à celui-ci, selon l'une quelconque des revendications précédentes, un arbre de sortie de moteur (24) du moteur électrique (12), qui est disposé coaxialement par rapport à ses enroulements, étant connecté à l'arbre d'entrée (25) de la transmission (16) et étant réalisé sous forme d'arbre creux qui est traversé coaxialement par l'un des arbres de sortie (52) de la transmission.
